# EUROPEAN PATENT SPECIFICATION

(11) **EP 1 116 836 B1**
(45) Date of publication and mention of the grant of the patent: **07.03.2007**
(21) Application number: 00204577.1
(22) Date of filing: 18.12.2000
(51) Int. Cl.: E04G 23/02

(54) **External reinforcement for beams columns, plates and the like**
Oberflächenbewehrung für Träger, Säulen, Platten o. d
Renforcement externe pour poutres, colonnes, dalles ou similaire

(30) Priority: 13.01.2000 BE 20000027
(43) Date of publication of application: 18.07.2001
(73) Proprietor: Immo Emergo, naamloze vennootschap, 2610 Wilrijk (BE)
(72) Inventor: De Neef, Dirk Christiaan Jozef Isidoor, 2650 Edegem (BE)
(74) Representative: Donné, Eddy

(56) References cited:
- EP-A- 0 799 951
- EP-A- 0 859 085

## Description

The present invention relates to an external reinforcement for beams, columns, plates and the like, more particularly a reinforcement which allows to increase the maximum permissible load of existing beams, columns or the like, made of wood, concrete, metal or another material.

It is known that for reinforcing existing constructions, external reinforcements are provided which consist of, for example, a steel sheet, whereby this latter is attached to such construction by means of glue, bolts or the like.

Such known external reinforcement, however, shows the disadvantage that, on one hand, it is very heavy and, on the other hand, it is difficult to attach.

In order to eliminate said disadvantages, already an alternative external reinforcement has been proposed, which reinforcement consists of a plate formed of fibers, such as, for example, carbon fibers, glass fibers or aramide fibers, which are embedded in a resin.

Up to the present, such reinforcement is provided in a continuous process, for example, by pultrusion.

By means of this known technique, it is in fact possible to realize an external reinforcement having a well-defined composition, a very large length, a constant width and thickness, and a smooth surface.

Although such external reinforcement is considerably less heavy and can be provided relatively easy in comparison to external reinforcements consisting of sheets, it shows the considerable disadvantage that all fibers are situated in the longitudinal direction of the plate-shaped reinforcement, such that such plates can take up forces only in their longitudinal direction.

In fact, the forces which in this case are exerted on the fibers are transferred to the surrounding fibers only by means of the resin.

Moreover, it is not possible to drill openings in such known reinforcing plates, in consideration of the fact that this would result in a local interruption of some fibers, such that also the forces exerted on the thus interrupted fibers can not be transferred on the surrounding fibers.

Another disadvantage of the known external reinforcements is that the surface thereof is very smooth as a result of the production method of such plates, as a result of which the adherence thereof on a construction to be reinforced is rather small, such that, in order to improve such adherence, this surface generally is treated with the intention of roughening it, for example, by sandblasting, scouring or treating it in another manner, which, however, is very labour-intensive. Moreover, the fibers may be damaged by such treatment, as a result of which the strength of the reinforcing plate is reduced.

EP 0.799.951 discloses a reinforcement element which consists of a carbon fiber cloth which is applied onto a structural member, such as a bridge or a road. After being applied on said member, the cloth is cured thereon with an epoxy resin. The reinforcement material is thus formed integral with the structural member.

An important disadvantage of such a reinforcement according to EP 0.799.951 is that the environmental conditions on site can very often not be controlled, such that the quality of such a reinforcement cannot be guaranteed. Therefore, this method is not suitable to be used in freezing conditions or when it is raining heavily or when the structure is dirty or wet.

Another disadvantage of such a reinforcement element according to EP 0.799.951 is that the realisation of the reinforcement is a very difficult task and requires specially trained workers, equipped with specific materials and tools for respectively preparing the surface of the structure for better adherence of the resin; for mixing the composing products of the resin; for impregnating the reinforcing sheet material; and for applying either the resin or the impregnated sheet material to the surface of the structure.

The present invention thus has an external reinforcement as its object which excludes the aforementioned and other disadvantages of the known additional reinforcements and which has as its most important purpose to allow for a better adherence and connection between the external reinforcement and the column, beam or such to be reinforced.

The invention also aims at such external reinforcement which can be realized thicker at the locations where the largest tensile and/or pressing forces occur.

According to the invention, this aim is achieved by an external reinforcements in the form of a massive prefabricated plate, substantially consisting in the combination of fibers and a resin, whereby the majority of the fibers is situated in the longitudinal direction of the reinforcement and whereby at least well-defined portions of the external reinforcement are provided with an additional reinforcement formed by fibers which are arranged according to at least one direction differing from the longitudinal direction of the reinforcement.

With the intention of better showing the characteristics of the invention, hereafter, as an example without any limitative character, a preferred form of embodiment of an external reinforcement for beams, columns, plates and such is described which substantially consists in the combination of fibers and a resin.

The aforementioned fibers in the external reinforcement may consist of glass fibers, carbon fibers, aramide fibers or natural fibres, such as hemp, flax, cocos, or a combination of such fibers, whereas the resin preferably is an epoxy resin, a vinyl ester resin, a polyester resin or another suitable kind of resin.

According to the invention, a plate-shaped external reinforcement will be realized whereby not only the majority of the fibers is situated in the longitudinal direction of the external reinforcement, which also is the direction in which a tensile force will be exerted upon the external reinforcement, but moreover, according to the invention, an additional reinforcement is provided, at least in well-defined portions of the external reinforcement, by adding fibers which are situated in at least one direction other than the longitudinal direction of the external reinforcement.

In a particular form of embodiment, the thickness of the external reinforcement may be variable in the longitudinal direction thereof in order to strengthen the reinforcement at the locations where the tensile and/or pressing forces are the largest, for example, in case of an external reinforcement for a beam, in the middle of the length of the beam.

The fibers in the aforementioned well-defined parts are directed such that they cross each other, such that, when drilling through the external reinforcement, the tensile and/or pressing forces are transferred to other reinforcement fibers, which allows for a mechanical anchoring of the external reinforcement to the material to be reinforced, by means of screws, bolts and such.

Moreover, locally a rough surface is obtained, which offers the important advantage that the adherence of the glue increases, as a result of which the reinforcement will take up the forces in a better way.

According to the invention, the external reinforcement can take up forces which are not directed according to the longitudinal direction of the material to be reinforced.

Before being applied on site, the external reinforcement can be provided at one or both sides with a fabric with poor adherence, which fabric, when removed, leaves an impression on the external reinforcement.

By removing this fabric before applying the external reinforcement, also a rough surface is obtained, such that additional treatments, such as sandblasting or scouring of the reinforcement, become redundant.

The aforementioned fabric with poor adherence moreover protects the external reinforcement against pollution, such as fingerprints, dust and such, which might render the glueing of the external reinforcement to the material to be reinforced difficult.

In a particular case, the external reinforcement can be isotropic on well-defined locations.

As an external reinforcement according to the invention, at least at the locations where it is attached by means of glue, bolts or such to a beam, column or such, is provided with additional fibers which are directed otherwise than the longitudinal direction of the aforementioned majority of the fibers, it is obtained that the provision of openings in the reinforcement for passing the aforementioned bolts remains without effect on the tensile or pressing strength of the longitudinally-directed fibers.

In fact, such openings can be provided in said external reinforcement beforehand or afterwards, for example, when manufacturing the reinforcement, more particularly by providing the fibers, previous to the hardening of the resin, in such a manner that they are arranged around the required openings.

The aforementioned fibers which have to provide for the additional strengthening in the external reinforcement, can be formed by fabrics, warp-knit fabrics, mats, fleeces or such consisting of fibers which are arranged at least according to one direction which deviates from the longitudinal direction of the external reinforcement.

At the surface of the external reinforcement, furthermore a fleece, either electrically conducting or not, may be provided, such as, for example, a glassfiber fleece, a polyester fleece or such.

The present invention is in no way limited to the embodiment described in the aforegoing. Such external reinforcement for beams, columns and the like thus can be realized in a variety of forms and dimensions without leaving the scope of the invention, as this is defined in the appended claims.

## Claims

1. External reinforcement for beams, columns, plates and the like, in the form of a massive prefabricated plate, having a longitudinal direction, consisting in the combination of fibers and a resin wherein the fibers are embedded in the resin and whereby the majority of the fibers is situated in the longitudinal direction of the reinforcement, **characterized in that** at least well-defined portions of the external reinforcement are provided with an additional reinforcement formed by fibers which are arranged according to at least one direction differing from the longitudinal direction of the reinforcement.

2. External reinforcement according to claim 1, **characterized in that** the thickness thereof may vary locally, depending on the tensile forces or pressing forces exerted thereupon.

3. External reinforcement according to claim 1, **characterized in that** at least a part of the fibers is formed by a fabric, a warp-knit fabric, mats, fleeces or the like.

4. External reinforcement according to claim 1 or 3, **characterized in that** the fibers are formed at least partially by glass fibers, carbon fibers, aramide fibers, natural or synthetic fibers or a combination thereof.

5. External reinforcement according to any of the preceding claims, **characterized in that** as a resin, epoxy resin, polyester resin, vinyl ester resin, phenole resin, a mineral resin or a thermoplast is used.

6. External reinforcement according to any of the preceding claims, **characterized in that** before being attached, it is provided at one or both sides, at least locally, with a fabric with poor adherence which, when removed, leaves an impression on the external reinforcement.

## Patentansprüche

1. Oberflächenbewehrung für Träger, Säulen, Platten und dergleichen in Form einer massiven vorgefertigten Platte, die eine Längsrichtung aufweist, bestehend aus der Kombination von Fasern und einem Harz, wobei die Fasern in das Harz eingebettet sind und wobei die Mehrheit der Fasern in Längsrichtung der Bewehrung angeordnet ist, **dadurch gekennzeichnet, dass** wenigstens bestimmte Teile der Bewehrung mit einer zusätzlichen Verstärkung versehen ist, die aus Fasern gebildet ist, die gemäß wenigstens einer Richtung, die von der Längsrichtung der Bewehrung verschieden ist, angeordnet sind.

2. Oberflächenbewehrung nach Anspruch 1, **dadurch gekennzeichnet, dass** die Dicke je nach den darauf ausgeübten Zug- und Druckkräften lokal variieren kann.

3. Oberflächenbewehrung nach Anspruch 1, **dadurch gekennzeichnet, dass** wenigstens ein Teil der Fasern durch ein Gewebe, ein Kettengewirk, Matten, Vliese oder dergleichen gebildet ist.

4. Oberflächenbewehrung nach Anspruch 1 oder 3, **dadurch gekennzeichnet, dass** die Fasern wenigstens teilweise aus Glasfasern, Kohlefasern, Aramidfasern, natürlichen oder synthetischen Fasern oder einer Kombination von diesen bestehen.

5. Oberflächenbewehrung nach einem der vorhergehenden Ansprüche, **dadurch gekennzeichnet, dass** als Harz Epoxidharz, Polyesterharz, Vinylesterharz, Phenolharz, ein Mineralharz oder ein Thermoplast verwendet wird.

6. Oberflächenbewehrung nach einem der vorhergehenden Ansprüche, **dadurch gekennzeichnet, dass** sie, bevor sie angebracht wird, auf beiden Seiten wenigstens lokal mit einem schlecht haftenden Gewebe versehen wird, das, wenn es entfernt wird, einen Abdruck auf der Oberflächenbewehrung hinterlässt.

## Revendications

1. Renforcement externe pour des poutres, des colonnes, des dalles et similaires, sous la forme d'une dalle massive préfabriquée possédant une direction longitudinale, constituée par la combinaison de fibres et d'une résine, les fibres étant enrobées de la résine, et la majorité des fibres étant situées dans la direction longitudinale du renforcement, **caractérisé en ce qu'**au moins des portions bien définies du renforcement externe sont munies d'un renforcement supplémentaire formé par des fibres qui sont arrangées conformément à au moins une direction qui diffère de la direction longitudinale du renforcement.

2. Renforcement externe selon la revendication 1, **caractérisé en ce que** son épaisseur peut varier localement, en fonction des forces de traction ou des forces de pression qui s'y exercent.

3. Renforcement externe selon la revendication 1, **caractérisé en ce qu'**au moins une partie des fibres sont formées par un tissu, par un tissu tricoté, par des mats, par des nappes ou analogues.

4. Renforcement externe selon la revendication 1 ou 3, **caractérisé en ce que** les fibres sont formées au moins en partie par des fibres de verre, des fibres de carbone, des fibres d'aramide, des fibres naturelles ou synthétiques, ou par une de leurs combinaisons.

5. Renforcement externe selon l'une quelconque des revendications précédentes, **caractérisé en ce qu'**on utilise, à titre de résine, une résine époxy, une résine de polyester, une résine d'esters vinyliques, une résine phénolique, une résine minérale ou une matière thermoplastique.

6. Renforcement externe selon l'une quelconque des revendications précédentes, **caractérisé en ce que**, avant sa fixation, il est muni sur un côté ou sur les deux côtés, au moins localement, des tissus possédant une faible adhérence qui, lorsqu'on le retire, laisse subsister une impression sur le renforcement externe.
